# EUROPÄISCHE PATENTSCHRIFT

(11) **EP 1 415 536 B1**
(45) Veröffentlichungstag und Bekanntmachung des Hinweises auf die Patenterteilung: **02.08.2006**
(21) Anmeldenummer: 03024845.4
(22) Anmeldetag: 31.10.2003
(51) Int. Cl.: A01M 21/02, A46B 3/14, A46B 9/10

(54) **Langgestreckter Besen zum mechanischen Abtragen von Wildkraut von befestigten Bodenflächen**
Elongated brush for the mechanical removal of weeds from consolidated ground surfaces
Balai allongé pour l'arrachage mécanique d'adventices de surfaces de sol consolidées

(30) Priorität: 02.11.2002 DE 20216915 U
(43) Veröffentlichungstag der Anmeldung: 06.05.2004
(73) Patentinhaber: AS-Motor Germany GmbH & Co. KG, 74420 Oberrot (DE)
(72) Erfinder: Christa Reiners, 41812 Erkelenz (DE)
(74) Vertreter: Hoeger, Stellrecht & Partner Patentanwälte

(56) Entgegenhaltungen:
- EP-A- 0 740 915
- DE-A- 3 402 606
- DE-A- 19 946 892
- DE-U- 29 623 797
- US-A- 3 312 993
- DATABASE WPI Section PQ, Week 199117, Derwent Publications Ltd., London, GB; Class P12, AN 1991-123248 & SE 8 902 781 A (BRODDWAY AB) 22 Februar 1991

## Beschreibung

Die Erfindung betrifft einen langgestreckten Besen zum mechanischen Abtragen von Wildkraut von befestigten Bodenflächen, wie beispielsweise Wegen, Straßen, Plätzen oder Rinnen, mit den Merkmalen des Oberbegriffs von Patentanspruch 1.

Vorrichtungen zum mechanischen Abtragen von Wildkraut werden beschrieben in DE 199 46 892 A1. Im Bekannten wird zum mechanischen Abtragen des Wildkrauts mindestens ein an einer bei Betrieb rotierbaren Werkzeugwelle befestigtes Arbeitswerkzeug vorgesehen. Das Arbeitswerkzeug soll die zu reinigende Bodenfläche nicht aufrauhen, aber in der Lage sein, auch in Rinnsteinkanten wachsendes Wildkraut abzuschlagen. Daher wird das jeweilige Arbeitswerkzeug durch Ausnutzung der Fliehkraft in einer quer zur Werkzeugwelle verlaufenden Kippwelle schwenkbar relativ zur Bodenfläche positioniert. Beim Rotieren berührt das Arbeitswerkzeug die Bodenfläche mit einem durch die Fliehkraft bestimmten Arbeitsdruck.

Eine weitere Ausgestaltung der bekannten Vorrichtung wird beschrieben in der nicht vorveröffentlichten DE 101 39 989 A1. Auch der Gegenstand dieser Patentanmeldung soll durch die vorliegende Erfindung verbessert werden. Im Bekannten kann der dort als Borstenarm bezeichnete Besen in einer Hülse mit Hilfe einer Klemmschraube arretiert werden. Alternativ kann das Arbeitswerkzeug im Bekannten ein Führungsteil besitzen, das in Längsrichtung des Werkzeugs beweglich in einer Hülse aufgenommen wird.

Aus der Patentschrift US-A-3,312,993 ist eine Bürstenkonstruktion bekannt, bei der eine Vielzahl von Borsten zu mehreren Borstenbündeln zusammengefasst in einem becherförmigen Borstenhalter festgelegt sind. Der Borstenhalter ist zylindersymrnetrisch ausgebildet und die Gesamtheit der Borsten bildet mit ihrem freien Ende eine kreisringförmige oder kreisförmige Endfläche aus.

Die bekannten Werkzeug- bzw. Besenhalterungen haben sich bewährt. Wenn ein Werkzeug in bestimmter Orientierung (Drehung um die Besenlängsachse) in die jeweilige Halterung eingesetzt werden soll, z.B. weil das Arbeitsende des Besens entsprechend vorbereitet ist, kommt es aber vor, dass der Besen falsch orientiert in seine Halterung befestigt wird. Bei den starken mechanischen Erschütterungen, denen das Werkzeug beim Betrieb ausgesetzt ist, kann auch eine Drehung des Besens um seine Längsachse nicht immer ausgeschlossen werden.

Nach dem vorgenannten Stand der Technik pilzt sich ein als Besen vorgesehener, an den Längsenden abgesägter Drahtseilabschnitt bei Betrieb normalerweise von allein auf, so dass der Besen seine Fegeaufgabe (mit dem aufgepilzten Fege-Kopf) wahrnehmen kann. Es ist aber in der Praxis vorgekommen, dass sich das freie Ende bzw. Arbeitsende des Besens nicht von selbst aufpilzt, sondern beim Rotieren und Reiben gegen den Boden so heiß wird, dass es Funken sprüht, verschweißt und/oder (schließlich) verglüht. Dieser kaum vorhersehbare Effekt kann vielleicht darauf zurückgeführt werden, dass die eingesetzten Drahtseilabschnitte nicht immer völlig gleichmäßig gedreht sind.

Der Erfindung liegt in erster Linie die Aufgabe zugrunde, eine Halterung mit einer Aufnahme für das Arbeitswerkzeug, den Besen, zu schaffen, in welche man das Arbeitswerkzeug nur in vorgegeben bestimmter Weise orientiert einstecken und nach dem Einstecken nicht mehr ungewollt relativ zur Aufnahme drehen kann. Eine weitere Aufgabe besteht darin zu erreichen, dass ein Verschweißen bzw. Verglühen des Werkzeugs und damit ein übermäßiger Werkzeugverbrauch praktisch ausgeschlossen wird.

Diese Aufgaben werden bei einem Besen der eingangs genannten Art erfindungsgemäß dadurch gelöst, dass die drahtartigen Stangen nach Art eines Drahtseilabschnittes gebündelt sind, dass die Hülse aus einem verpressbaren Metall besteht und ein Pressteil ausbildet, in das ein Ende des Drahtseilabschnittes eingepresst ist, wobei die Hülse durch das Pressen zu einem ovalen Querschnitt verformt ist, und dass das der gepressten Hülse gegenüberliegende freie Ende des Drahtseilabschnittes vor dem ersten Einsatz dadurch aufgepilzt ist, dass die freien Drahtenden zu einer Art Pilz in radialer Richtung bezogen auf die Längsrichtung des Drahtseilabschnittes auseinander gebogen sind.

Der Drahtseilabschnitt wird durch das Einpressen in eine Metallhülse dauerhaft und sicher gehalten. Die ovale Form der Hülse bewirkt, dass sie verdrehsicher in einer Aufnahme angebracht wird und dass dies nur in ganz bestimmter Orientierung möglich ist.

Die Verpressung der drahtartigen Stangen in der Metallhülse soll so fest sein, dass die drahtartigen Stangen, also die eigentlichen Besen-Brosten, auch bei hohen Fliehkräften bei Betrieb des Reinigungsgeräts nicht aus der Hülse herausgeschleudert oder als Reaktion auf den Arbeitsdruck zurück in die Hülse bzw. durch diese hindurch gedrückt werden können. Einige Verbesserungen und weitere Ausgestaltungen der Erfindung werden in den Unteransprüchen angegeben.

Vor dem Einstecken des Drahtseils soll die verwendete Metall-Hülse eine Innenform und einen Innendurchmesser aufweisen, der ein problemloses Einstecken des Drahtseilabschnitts gerade erlaubt. Nach dem Einstecken soll die Metall-Hülse in eine ovale Form so zusammengepresst werden, dass der Drahtseilabschnitt nicht mehr herausziehbar ist.

Gemäß vorteilhafter Ausführungsform können in die Metall-Hülse ein oder mehrere Quetschdellen eingepresst sein, die das Drahtseil zusätzlich unverrückbar fixieren. Die Quetschstellen können beim Arretieren des Besens in einer Halterung des jeweiligen Reinigungsgeräts dienen; beispielsweise kann eine Feststellschraube einer entsprechenden Aufnahme der Besen-Halterung der Maschhine in eine solche Delle hinein geschraubt werden. Die Aufnahme soll auf der Innenfläche sein, so dass die gepresste Hülse in der rauhen Praxis gerade noch ohne zusätzliches Werkzeug einsteckbar ist.

Wie bereits gesagt, besteht eines der Probleme herkömmlicher Arbeitswerkzeuge darin, dass sich das jeweils eingepresste Drahtseil beim ersten Einsatz mit laufender Maschine nicht immer aufpilzt, sondern manchmal heiß wird, übermäßig abnutzt und/oder verglüht. Diesem Problem wird gemäß der Erfindung dadurch begegnet, dass das für die eigentliche Besenfunktion vorgesehene freie Besenende (der Fegekopf) bereits vor dem ersten Einsatz mechanisch aufgepilzt wird. Das Aufpilzen kann zum Beispiel mit Hilfe eines Doms erfolgen, der in das freie Längsende eines mit der eingepressten Seite elngespannten Drahtseils gestoßen und in radialer Richtung (in Bezug auf das Drahtseil) hin- und herbewegt wird.

Durch das beschriebene Vorpilzen des freien Besenendes wird der Materialverbrauch auch dann reduziert, wenn sich das Drahtseil beim ersten Betrieb von selbst aufpilzt. Das bereits von Anfang an aufgepilzte freie Besenende schließt nämlich von vornherein - wegen der Luftkühlung - ein übermäßiges Erhitzen (der Drahtteile) aus. Die Pilzform des Besens hat schließlich auch Einfluß auf die Fliehkraft und damit die Putzwirkung beim Rotieren. Wenn der Besen von vornherein selbst aufgepilzt ist, erhält man praktisch von der ersten Drehung der Reinigungsvorrichtung an eine optimale Putzwirkung. Die durch die Pilzform des Besens bewirkte Luftverwirbelung beeinflußt nämlich die Fliehkraft und verbessert die Reinigungswirkung.

Anhand der schematischen Zeichnung von Ausführungsbeispielen werden Einzelheiten der Erfindung erläutert. Es zeigen:
- Fig. 1:: einen in einem Metall-Pressteil eingeschlossenen Besen; und
- Fig**.** 2 u. 3:: weitere Beispiele von Querschnittsformen des Pressteils;
- Fig. 4:: einen Teil einer Reinigungsvorrichtung mit schwenkbar auf einem Träger gelagerter Besenaufnahme, wobei der Träger selbst um eine vertikale Achse rotierbar gelagert ist; und
- Fig. 5 u. 6:: Ausführungsbeispiele der Hülsen-Aufnahme.

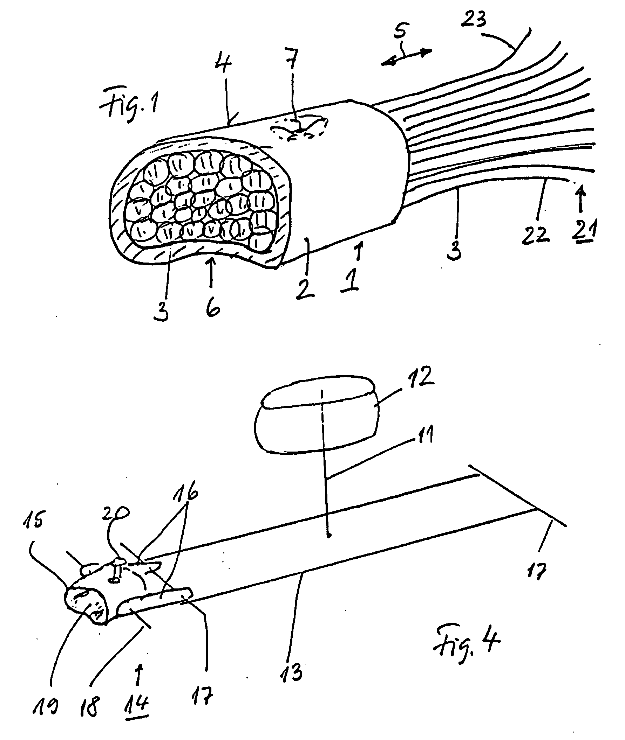

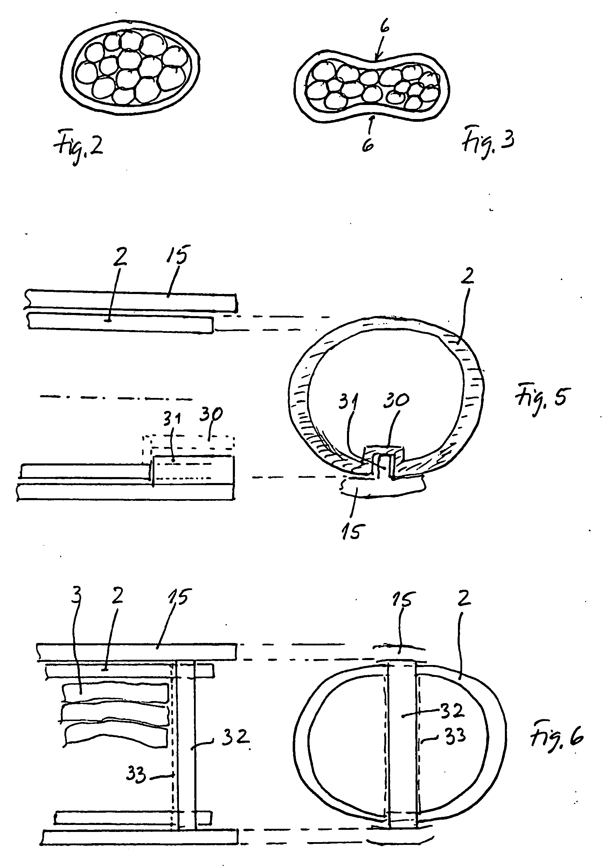

Fig. 1 zeigt einen erfindungsgemäßen langgestreckten Besen 1 bestehend aus einer Hülse 2 mit darin gebündelt eingepressten Drähten 3. Die Hülse 2 besitzt einen unrunden Außenumfang 4. Beispielsweise kann nach Fig. 1 eine unsymmetrisch ovale Querschnittsform mit einer sich in Längsrichtung 5 des Besens erstreckenden Nut 6 vorgesehen werden. Statt dessen kommen im Rahmen der Erfindung beispielsweise auch symmetrisch ovale (annähernd elliptische) Querschnittsformen nach Fig. 2 in Frage. Erfindungsgemäß werden auch diese Formen zwecks Fixieren des Drahtseilabschnitts, gepresst. Die Querschnittsform eines so entstandenen Pressteils nach Fig. 3 kann beispielsweise aus einem Kreiszylinder hervorgegangen sein, der von zwei gegenüberlilegenden Seiten her der Länge nach zusammengepresst wurde, so dass er schließlich zwei einander gegenüberliegende Nuten 6 (nach Fig. 1) enthält.

Bei allen diesen Querschnittsformen der Hülse 2 kann in deren Außenumfang 4 wenigstens eine Delle 7 eingepresst sein, um die Stabilität des Pressteils insgesamt zu erhöhen. In Längsrichtung 5 der Hülse 2 können auch zwei oder mehr Quetschdellen 7 vorgesehen werden; es ist dann möglich, die Hülse 2 mehr oder weniger weit arretiert in die Aufnahme 15 zu stecken. Eine der Dellen 7 kann auch als Kennung des Herstellers ausgebildet werden.

In Fig. 4 werden Teile einer mit dem erfindungsgemäßen Besen auszustattenden Bodenbearbeitungsmaschine im Prinzip dargestellt. Auf einer bei Betrieb rotierbaren Werkzeugwelle 11, die durch einen Motor 12 angetrieben sein kann, wird ein zum Beispiel balkenförmiger Träger 13 mit daran angebrachten Arbeitswerkzeugen 14 fixiert. Im dargestellten Fall besteht ein auf dem Träger 13 gelagertes Arbeitswerkzeug 14 aus dem Besen 1 nach Fig. 1, aus einer die Hülse 2 des Besens 1 aufnehmenden Aufnahme 15 und einem Schwenkschenkel 16. Der Schwenkschenkel 16 ist um eine Schwenkachse 17 auf dem Träger 13 gelagert.

Die Aufnahme 15 ist auf einer Kippachse 18 am freien (der Achse 18 gegenüberliegenden) Ende des Schwenkschenkels 16 gelagert. Die Aufnahme 15 besitzt einen unrunden Innenquerschnitt bzw. Innenumfang 19, dessen Form derart genau der jeweilig vorgegebenen Außenform 4 der Hülse 2 (= Pressteil) entspricht, dass die Hülse 2 in die Aufnahme 15 eingesteckt werden kann. Der Besen 1 nach Fig. 1 kann dann mit seiner gepressten Hülse 2 nur in bestimmter Orientierung (zum Beispiel in zwei Schwenkstellungen in Bezug auf die Längsachse der Hülse) in die Aufnahme 15 eingesteckt werden. Zum Arretieren der Hülse 2 in der Aufnahme 15 kann an letzterer eine Klemmschraube 20 vorgesehen werden, die in Bezug auf die Delle 7 (oder umgekehrt) so positioniert wird, dass sie nach dem Einschrauben in die Delle 7 eingreift.

Gemäß der Erfindung ist das der Hülse 2 gegenüberliegende freie Ende, der Fegekopf 21, des Besens 1 bereits vor dem ersten Einsatz des Besens aufgepilzt. Zu diesem Zweck können die freien Drahtenden 22 zu einer Art Pilz 23 (in radialer Richtung in Bezug auf die Längsachse 5) auseinander gebogen werden.

Vorzugsweise können in der Aufnahme 15 (gegebenenfalls zusätzliche) Verdrehsicherungen, zum Beispiel mit Zapfen in der Aufnahme und Nut an dem Pressteil (oder umgekehrt), vorgesehen werden. Hiernach kann in die Hülse 2 gemäß Fig. 1 bei dem Pressen auf einer Seite wie in Fig. 5 eine Nut 30 eingeformt und innerhalb der Aufnahme 15 ein entsprechender Zapfen 31 vorgesehen werden. Die Nut 30 und der Zapfen 31 sollen auf einem vorgegebenen Längsabschnitt an dem dem Fegekopf 21 gegenüberliegenden Ende der Hülse vorgesehen werden, so dass sie (Zapfen und Nut) zugleich als Anschlag beim definierten Einschub des Pressteils in die Aufnahme geeignet sind.

Der Zapfen kann auch ganz anders als nach Fig. 5, zum Beispiel als eine Art diametrale bzw. radiale Speiche 32 nach Fig. 6 ausgebildet werden. Gegebenenfalls wird das mit der Speiche 32 zu kuppelnde Längsende des Pressteils mit einer entsprechend diametral durchgehenden Kerbe 33 ausgestattet. Speiche 32 und Kerbe 33 wirken in diesem Fall zugleich als Verdrehsicherung und als Anschlag bzw. Stopper für das Pressteil. Vorzugsweise wird die gegenseitige Anordnung und Formgebung so getroffen, dass die Drähte an dem Längsende der Hülse nur bis zur Ebene des - im Wesentlichen in radialer Richtung (in Bezug auf die Achse der Hülse) verlaufenden - Bodens der Kerbe reichen und die Speiche, die vorzugsweise aus Stahl besteht, ein Zurückschieben einzelner Bündel von Drähten (an der Speiche vorbei) verhindert.

### Bezugszeichenliste:

- 1 =: Besen
- 2 =: Hülse
- 3 =: Drähte
- 4 =: Außenumfang (2)
- 5 =: Längsrichtung
- 6 =: Längsnut
- 7 =: Delle
- 11 =: Werkzeugwelle
- 12 =: Motor
- 13 =: Träger
- 14 =: Arbeitswerkzeug
- 15 =: Aufnahme
- 16 =: Schwenkschenkel
- 17 =: Schwenkachse
- 18 =: Kippachse
- 19 =: Innenumfang
- 20 =: Klemmschraube
- 21 =: Fegekopf
- 22 =: Drahtenden
- 23 =: Pilz
- 30 =: Nut
- 31 =: Zapfen
- 32 =: Speiche
- 33 =: Kerbe

## Patentansprüche

1. Langgestreckter Besen (1) zum mechanischen Abtragen von Wildkraut von befestigten Bodenflächen, der aus in einer Hülse (2) gebündelten drahtartigen Stangen (3) besteht und der in einer Aufnahme (15) eines um eine vertikale Maschinenachse (11) rotierbar antreibbaren Trägers (13) anbringbar ist, **dadurch gekennzeichnet, dass** die drahtartigen Stangen nach Art eines Drahtseilabschnittes gebündelt sind, dass die Hülse (2) aus einem verpressbaren Metall besteht und ein Pressteil ausbildet, in das ein Ende des Drahtseilabschnittes (2) eingepresst ist, wobei die Hülse (2) durch das Pressen zu einem ovalen Querschnitt verformt ist, und dass das der gepressten Hülse (2) gegenüberliegende freie Ende des Drahtseilabschnittes vor dem ersten Einsatz **dadurch** aufgepilzt ist, dass die freien Drahtenden (22) zu einer Art Pilz (23) in radialer Richtung bezogen auf die Längsrichtung des Drahtseilabschnittes auseinander gebogen sind.

2. Besen nach Anspruch 1, **dadurch gekennzeichnet, dass** die Hülse (2) aus Aluminium besteht.

3. Besen nach Anspruch 1 oder 2, **dadurch gekennzeichnet, dass** die Hülse (2) in ihrem Außenumfang (4) mindestens eine Quetsch-Delle (7) besitzt.

4. Besen nach Anspruch 3, **dadurch gekennzeichnet, dass** die Hülse (2) verteilt in der Längsrichtung (5) zwei oder mehr Quetsch-Dellen (7) besitzt.

5. Besen nach einem der Ansprüche 1 bis 4, **dadurch gekennzeichnet, dass** in dem Außenumfang (4) der Hülse (2) an dem dem aufgepilzten Ende gegenüberliegenden Längsende eine Nut (30) vorgesehen ist.

## Claims

1. An elongated brush (1) for the mechanical removal of weeds from paved ground surfaces, which brush (1) consists of wire-like rods (3) bundled in a sleeve (2) and can be mounted in a receiver (15) of a bearer (13) rotatably driveable about a vertical machine axis (11), **characterised in that** the wire-like rods are bundled in the manner of a portion of wire rope, **in that** the sleeve (2) is composed of a compressible metal and forms a pressed part into which one end of the wire-rope portion (2) is pressed, wherein the sleeve (2) is given an oval cross-section through compression, and **in that** that end of the wire-rope portion which is free and facing the pressed sleeve (2) is mushroomed out before the first utilisation, by the free wire ends (22) being bent apart, into a form of mushroom (23), in the radial direction in relation to the longitudinal direction of the wire-rope portion.

2. A brush according to claim 1, **characterised in that** the sleeve (2) is composed of aluminium.

3. A brush according to claim 1 or 2, **characterised in that** the sleeve (2) has at least one squeezing depression (7) in its outer circumference (4).

4. A brush according to claim 3, **characterised in that** the sleeve (2) has two or more squeezing depressions (7) distributed in the longitudinal direction (5).

5. A brush according to any one of claims 1 to 4, **characterised in that** in the outer circumference (4) of the sleeve (2) there is provided a slot (30) located at the longitudinal end facing the mushroomed-out end.

## Revendications

1. Balai allongé (1) destiné au déblayage mécanique d'herbes sauvages de surfaces de sol stables, ledit balai étant constitué de tiges filaires (3) rassemblées en faisceau dans un manchon (2), et pouvant être monté dans un logement (15) d'un support (13) pouvant être entraîné en rotation autour de l'axe vertical (11) d'une machine, **caractérisé en ce que** les tiges filaires sont rassemblées en faisceau à la manière d'une portion de câble, **en ce que** le manchon (2) est en un métal comprimable et forme une pièce moulée par compression dans laquelle est enfoncée une extrémité de la portion de câble (2), le manchon (2) étant déformé par pressage pour obtenir une section ovale, et **en ce que** l'extrémité libre de la portion de câble qui est opposée au manchon pressé (2) est déployée avant la première utilisation, **en ce que** les extrémités libres (22) des tiges filaires sont écartées radialement par rapport à la direction longitudinale de la portion de câble à la manière d'un champignon.

2. Balai selon la revendication 1, **caractérisé en ce que** le manchon (2) est en aluminium.

3. Balai selon la revendication 1 ou 2, **caractérisé en ce que** le manchon (2) possède à sa périphérie extérieure (4) au moins un point de sertissage (7).

4. Balai selon la revendication 3, **caractérisé en ce que** le manchon (2) possède deux points de sertissage ou davantage (7) répartis dans la direction longitudinale (5).

5. Balai selon l'une des revendications 1 à 4, **caractérisé en ce qu'**une gorge (30) est ménagée dans la périphérie extérieure (4) du manchon (2) à l'extrémité qui est opposée à l'extrémité déployée par référence à la direction longitudinale.
